# EUROPÄISCHE PATENTSCHRIFT

(11) **EP 0 409 058 B1**
(45) Veröffentlichungstag und Bekanntmachung des Hinweises auf die Patenterteilung: **03.02.1993**
(21) Anmeldenummer: 90113217.5
(22) Anmeldetag: 11.07.1990
(51) Int. Cl.: G01G 21/24

(54) **Waage mit Lenkerparallelführung**
Balance with parallel rod guide system
Balance avec guidage parallèle à bras oscillants

(30) Priorität: 19.07.1989 DE 3923808
(43) Veröffentlichungstag der Anmeldung: 23.01.1991
(73) Patentinhaber: SARTORIUS AG, 37075 Göttingen (DE)
(72) Erfinder: Müller, Rudolf, D-3406 Bovenden 1 (DE); Fleischer, Peter, D-3400 Göttingen (DE); Martens, Veronika, D-3406 Bovenden (DE)
(74) Vertreter: Köhler, Rudolf

(56) Entgegenhaltungen:
- DE-A- 3 832 725
- DE-A- 3 832 746
- GB-A- 2 188 737
- US-A- 4 799 561

## Beschreibung

Die Erfindung bezieht sich auf eine Waage mit einem gehäusefesten Systemträger und mit einem Waagschalenstützteil, das durch zwei obere und zwei untere Lenkerstreben in Form einer Parallelführung mit dem Systemträger verbunden ist, wobei je eine obere Lenkerstrebe und eine untere Lenkerstrebe über zwei Verbindungsbereiche miteinander verbunden und zu einer Lenkerplatte zusammengefaßt sind und wobei die beiden Lenkerplatten seitlich am Systemträger und am Waagschalenstutzteil befestigt sind.

Eine Waage dieser Art ist aus der US-PS 4 799 561 bekannt. Dort sind der Systemträger und das Waagschalenstützteil gleich breit, so daß die seitlich angeschraubten Lenkerplatten parallel zueinander sind. Weiter sind die beiden Lenkerplatten im mittleren Bereich der Lenkerstreben über je ein Abstandsstück miteinander verbunden. Dies führt jedoch dazu, daß bei geringen Unterschieden in der Breite von Systemträger, Waagschalenstützteil und Abstandsstücken die seitlich angeschraubten Lenkerplatten verspannt werden und dadurch die Reproduzierbarkeit der Ergebnisse ver schlechtert wird. Die Anforderungen an die Breitentoleranzen sind dabei besonders hoch, da die Breitenunterschiede gerade im kritischen Bereich der Lenkerdünnstellen und innerhalb einer relativ geringen Distanz zwischen Systemträger und Abstandsstück bzw. zwischen Waagschalenstützteil und Abstandsstück überbrückt werden müssen. Dadurch wird aber der eigentliche Vorteil dieser Bauart mit seitlich angeschraubten Lenkerplatten - daß nämlich nur die beiden Lenkerplatten die Gute der Parallelführung bestimmen und Toleranzen im Systemträger und dem Waagschalenstützteil keine Rolle spielen - zum Teil wieder aufgehoben. Die Abstandsstücke im mittleren Bereich der Lenker können aber auch nicht einfach weggelassen werden, da ohne sie die Stabilität der Parallelführung gegenüber seitlichen Kräften auf die Waagschale zu gering wird.

Aufgabe der Erfindung ist es daher, für eine Waage der eingangs genannten Art eine solche Bauform anzugeben, die die erwähnten Nachteile nicht aufweist, insbesondere also ohne die Abstandsstücke im mittleren Bereich der Lenkerstreben auskommt.

Erfindungsgemäß wird dies dadurch erreicht, daß der Systemträger breiter ausgebildet ist als das Waagschalenstützteil und daß sowohl am Systemträger als auch am Waagschalenstützteil die beiden Anschraubflächen für die beiden Lenkerplatten einen Winkel miteinander bilden, so daß der Systemträger, die beiden Lenkerplatten und das Waagschalenstützteil in Aufsicht ein Trapez bilden.

Durch die Trapezform ergibt sich eine geometrische Versteifung, da seitliche Kräfte auf die Waagschale durch Druckund Zugkräfte in den Lenkerstreben abgeleitet werden und nicht zu einer Biegebeanspruchung führen. Dadurch kann auf die versteifende Wirkung der Abstandsstücke zwischen den Lenkerstreben verzichtet werden und die Toleranzen in der Breite von Systemträger und Waagschalenstützteil können sich auf der großen Distanz zwischen Systemträger und Waagschalenstützteil ausgleichen.

Vorteilhafte Weiterbildungen ergeben sich aus den abhängigen Ansprüchen.

Die Erfindung wird im folgenden anhand der schematischen Figuren beschrieben. Dabei zeigt:
Fig. 1 eine Seitenansicht der erfindungsgemäßen Waage,
Fig. 2 eine Aufsicht auf die Waage aus Fig. 1,
Fig. 3 eine Seitenansicht der Waage in einer zweiten Ausführungsform,
Fig. 4 eine Seitenansicht der Waage in einer dritten Ausführungsform und
Fig. 5 eine Aufsicht auf die Waage in einer vierten Ausführungsform.

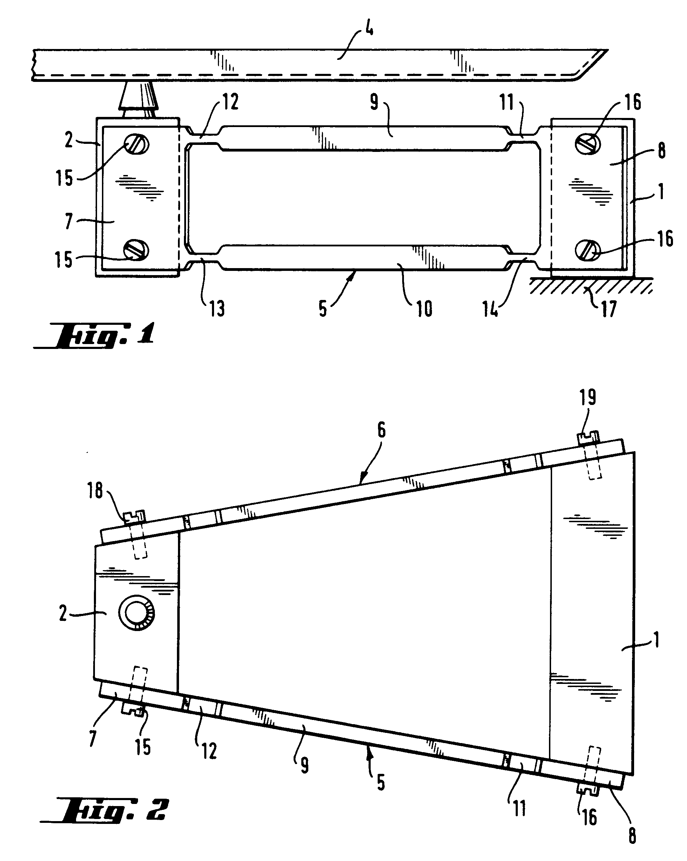

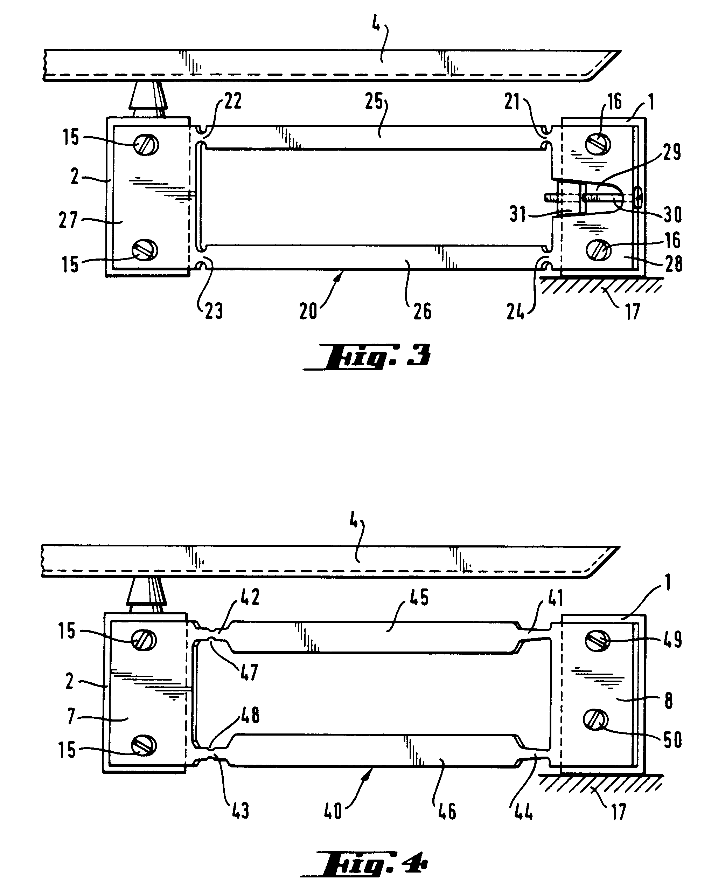

Die für die Erfindung wesentlichen Teile der Waage sind in Fig. 1 in Seitenansicht und in Fig. 2 in Aufsicht dargestellt. Der Systemträger 1 ist an einem nur in Fig. 1 angedeuteten Teil 17 des Waagengehäuses befestigt. Über eine Parallelführung aus den beiden Lenkerteilen 5 und 6 ist das Waagschalenstützteil 2 mit dem Systemträger 1 verbunden. Das Lenkerteil 5 besteht dabei aus einer oberen Lenkerstrebe 11/9/12, einer unteren Lenkerstrebe 14/10/13, einem Verbindungsbereich 8 auf der Seite des Systemträgers 1 und einem Verbindungsbereich 7 auf der Seite des Waagschalenstützteils 2. Das Lenkerteil 6 ist in entsprechender Weise aufgebaut. Die beiden oberen Lenkerstreben und die beiden unteren Lenkerstreben bilden dabei die Parallelführung, wobei die Dünnstellen 11,12,13,14 die Biegegelenke bilden. Das Lenkerteil 5 ist mit Schrauben 16 seitlich am Systemträger 1 und mit Schrauben 15 seitlich am Waagschalenstützteil 2 befestigt; in gleicher Weise ist das Lenkerteil 6 mit Schrauben 19 und 18 seitlich am Systemträger 1 und am Waagschalenstützteil 2 befestigt. Der Systemträger 1 ist nun breiter als das Waagschalenstützteil 2 und beide haben schräge Seitenflächen. Die Dimensionierung ist so gewählt, daß sich für beide Lenkerplatten je eine ebene Anschraubfläche ergibt. Eventuelle Maß- und Winkeltoleranzen sind dabei nicht so kritisch, da sie sich wegen des großen Abstandes des Waagschalenstützteils 2 vom Systemträger 1 über eine große Distanz ausgleichen können und dadurch nur zu sehr geringen Verspannungen führen. Die Trapezform ergibt eine deutliche Stabilisierung der Parallelführung gegenüber seitlichen (waagerechten) Kräften auf die Waagschale 4. Diese in Fig. 2 in der Zeichenebene nach oben oder unten wirkenden Kräfte werden durch die Trapezform in Zug- und Druckkräfte in den Lenkerplatten 5 und 6 umgewandelt und damit gefahrlos zum Systemträger 1 abgeleitet.

Die restlichen Teile der Waage sind in ihrem Aufbau und in ihrer Funktion allgemein bekannt. Zum Beispiel kann das Waagschalenstützteil 2 mit der Spule einer elektromagnetischen Kraftkompensation verbunden sein, wie es in der DE-PS 30 02 462 gezeigt ist.

Oder das Waagschalenstützteil 2 ist über ein Koppelelement mit einem Übersetzungshebel verbunden, der die Spule einer elektromagnetischen Kraftkompensation trägt, wie es in den Gebrauchsmustern DE-GM 81 37 825 und DE-GM 84 09 630 gezeigt ist. Das Koppelelement kann dabei auch mit der Federlagerung für den Übersetzungshebel kombiniert sein, wie es in der DE-PS 38 38 906 gezeigt ist. Die Elektronik für die elektromagnetische Kraftkompensation ist ebenfalls allgemein bekannt und beispielsweise in den schon zitierten DE-PS 30 02 462 oder DE-PS 38 38 906 beschrieben.

Statt der vorzugsweise einzusetzenden elektromagnetischen Kraftkompensation ist selbstverständlich auch jeder andere wegarme Meßwertaufnehmer möglich, wie z.B. eine schwingende Saite oder ein Schwingquarz oder ein optischer Meßwertaufnehmer.

Die beiden Lenkerplatten 5 und 6 können gestanzt, in einem Arbeitsgang gefräst oder vorteilhafterweise funkenerodiert werden. Dadurch können die beiden Lenkerplatten mit sehr geringen Unterschieden hergestellt werden, ohne daß der Aufwand zu groß wird. Da sich der vertikale Abstand der Gelenkstellen (in Fig. 1 der Abstand der Dünnstellen 11 und 14 sowie der Dünnstellen 12 und 13) bei der Montage der Lenkerplatten 5 und 6 nicht ändert, können durch die Montage keine zusätzlichen Fehler entstehen.

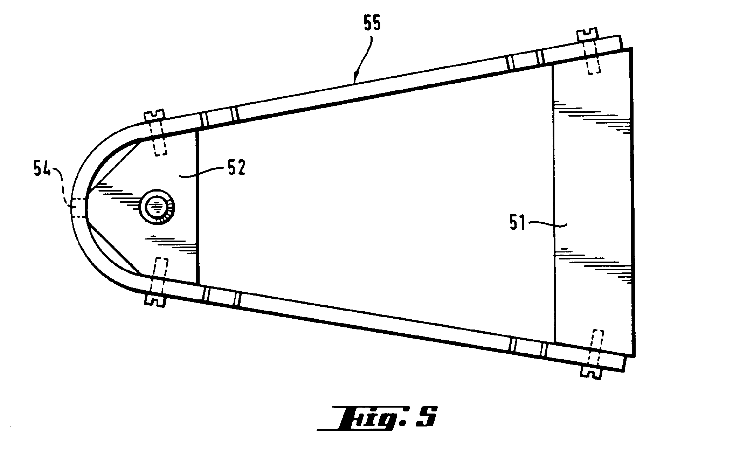

Die in Fig. 3 in Seitenansicht gezeigte zweite Ausführungsform unterscheidet sich von der ersten Ausführungsform durch eine anders gestaltete Lenkerplatte 20. Die Dünnstellen 21,22,23,24 gehen allmählich in das dickere Mittelteil 25 und 26 bzw. in die Verbindungsbereiche 27 und 28 über.

Weiter weist der Verbindungsbereich 28 am Systemträger 1 einen waagerechten Schlitz 29 auf. Dieser Schlitz 29 kann - wie in Fig. 3 gezeichnet - im Verbindungsbereich 28 enden, er kann aber auch durchgehen und den Verbindungsbereich 28 in einen oberen und einen unteren Teil trennen. Der Schlitz 29 ist etwas konisch (in Fig. 3 der Deutlichkeit halber übertrieben gezeichnet) und durch das Verschieben eines Klotzes 31 mittels einer Schraube 30 kann der Schlitz geringfügig aufgeweitet werden und dadurch die exakte Parallelität der oberen Lenkerstrebe 21/25/22 und der unteren Lenkerstrebe 24/26/23 eingestellt werden. Nach dem Einstellvorgang wird die untere Befestigungsschraube 16 angezogen und damit der justierte Zustand fixiert.

Die Einstellung der exakten Parallelität der oberen und unteren Lenkerstreben - und damit die Feineinstellung der Ecklastfreiheit der Waage - kann nicht nur in der eben geschilderten Weise erfolgen. Auch durch einen geringen Materialabtrag im Bereich der Dünnstellen 11,12,13,14 bzw. 21,22,23,24. kann der vertikale Abstand der Dünnstellen etwas verändert werden. Daneben ist es auch möglich, auf die Feineinstellung zu verzichten und durch einen sogenannten Ecklastsensor die Ecklastfreiheit durch rechnerische Korrektur in der Elektronik durchzuführen, wie es z.B. aus der DE-PS 30 03 862 bekannt ist. Vorteilhafterweise wird jeweils der vertikale Abstand der Dünnstellen 11 und 14 bzw. 21 und 24 auf der Seite des Systemträgers 1 etwas größer gewählt als der vertikale Abstand der Dünnstellen 12 und 13 bzw. 22 und 23 auf der Seite des Waagschalenstützteiles 2. Dadurch wird die Abweichung von der optimalen Einstellung der Ecklastfreiheit von vornherein geringer.

Die in Fig. 4 in Seitenansicht gezeigte dritte Ausgestaltung unterscheidet sich wieder durch die Formgebung der Lenkerplatte 40. Die Dünnstellen 41 und 44 auf der Seite des Systemträgers 1 sind anders ausgebildet als die Dünnstellen 42 und 43 auf der Seite des Waagschalenstützteils 2: Die Dünnstellen 41 und 44 sind leicht keilförmig ausgebildet, so daß der dünnste Bereich nahe am Systemträger 1 liegt; die Dünnstellen 42 und 43 sind symmetrisch ausgebildet und weisen in der Mitte einen zusätzlichen Materialabtrag 47 und 48 auf, so daß in der Mitte ein besonders dünner Bereich entsteht. Durch etwas verschiedene Tiefe des Grabens 47 auf der Oberseite und auf der Unterseite ist dabei eine Feinjustierung der Parallelität der Lenkerstreben möglich.

Weiter ist der mittlere, steifere Bereich 45 bzw. 46 der Lenkerstreben nicht symmetrisch zur Verbindungslinie der beiden Dünnstellen 41 und 42 bzw. 43 und 44. Auch die Befestigungsschrauben 49 und 50 für die Befestigung der Lenkerplatte 40 am Systemträger 1 sind unsymmetrisch angeordnet: Die obere Schraube 49 liegt etwa in Verlängerung der Dünnstelle 41, die untere Schraube 50 jedoch nicht.
- Alle diese Unsymmetrien erlauben es, das Ecklastverhalten der Waage zu beeinflussen und zu optimieren.

Bei der in Fig. 5 in Aufsicht gezeigten Ausführungsform sind die beiden Lenkerplatten und damit alle vier Lenkerstreben zu einem einzigen Teil 55 zusammengefaßt. Dieses Teil 55 ist mit senkrechter Biegeachse um das Waagschalenstützteil 52 herumgebogen. Auf der Seite des Systemträgers 51 kann das Teil 55 gerade auslaufen - wie in Fig. 5 gezeichnet - oder aber zur Stabilitätserhöhung ebenfalls in einer Kurve auslaufen. Zusätzlich ist es bei einer Waage mit Übersetzungshebel und mit Koppelelement zwischen Übersetzungshebel und Waagschalenstützteil 52 möglich, auch das Koppelelement mit in das Teil 55 zu integrieren. In Fig. 5 ist dies gestrichelt bei 54 angedeutet.

## Patentansprüche

1. Waage mit einem gehäusefesten Systemträger (1;51) und mit einem Waagschalenstützteil (2;52), das durch zwei obere und zwei untere Lenkerstreben in Form einer Parallelführung mit dem Systemträger verbunden ist, wobei je eine obere Lenkerstrebe und eine untere Lenkerstrebe über zwei Verbindungsbereiche miteinander verbunden und zu einer Lenkerplatte zusammengefaßt sind und wobei die beiden Lenkerplatten (5,6;55) seitlich am Systemträger und am Waagschalenstützteil befestigt sind, dadurch gekennzeichnet, daß der Systemträger (1;51) breiter ausgebildet ist als das Waagschalenstützteil (2;52) und daß sowohl am Systemträger (1;51) als auch am Waagschalenstützteil (2;52) die beiden Anschraubflächen für die beiden Lenkerplatten (5,6;55) einen Winkel miteinander bilden, so daß der Systemträger (1;51), die beiden Lenkerplatten (5,6;55) und das Waagschalenstützteil (2;52) in Aufsicht ein Trapez bilden.

2. Waage nach Anspruch 1, dadurch gekennzeichnet, daß der Querschnitt innerhalb der Dünnstellen (21,22,23,24;41, 42,43,44) variiert.

3. Waage nach einem der Ansprüche 1 oder 2, dadurch gekennzeichnet, daß die Dünnstellen (41,42,43,44) auf der Seite des Systemträgers (1) und auf der Seite des Waagschalenstützteils (2) verschieden ausgebildet sind.

4. Waage nach einem der Ansprüche 1 bis 3, dadurch gekennzeichnet, daß der Bereich (45;46) zwischen den Dünnstellen (41,42;43,44) unsymmetrisch zur Mittellinie der Dünnstellen (41,42;43,44) ausgebildet ist.

5. Waage nach einem der Ansprüche 1 bis 4, dadurch gekennzeichnet, daß die Lenkerstreben (41/45/42,44/46/43) am Waagschalenstützteil (2) und am Systemträger (1) angeschraubt sind und daß die Lage der Schrauben (15;49,50) am Waagschalenstützteil (2) und am Systemträger (1) verschieden ist.

6. Waage nach einem der Ansprüche 1 bis 5, dadurch gekennzeichnet, daß der Verbindungsbereich (28) auf der Seite des Systemträgers (1) einen Schlitz (29) aufweist.

7. Waage nach einem der Ansprüche 1 bis 6, dadurch gekennzeichnet, daß der vertikale Abstand der Dünnstellen (11, 14;21,24;41,44) auf der Seite des Systemträgers (1) etwas großer ist als der vertikale Abstand der Dünnstellen (12,13;22,23;42,43) auf der Seite des Waagschalenstützteiles (2).

8. Waage nach einem der Ansprüche 1 bis 7, dadurch gekennzeichnet, daß die beiden Lenkerplatten zu einem einzigen Teil (55) zusammengefaßt sind, das als Biegeteil mit mindestens einer senkrechten Biegeachse ausgebildet ist.

9. Waage nach Anspruch 8, dadurch gekennzeichnet, daß bei einer Waage mit Hebelübersetzung das Koppelelement (54) zwischen dem Waagschalenstützteil (52) und dem Übersetzungshebel ebenfalls mit in das Teil (55) integriert ist.

## Claims

1. Weighing machine comprising a fixed-to-housing system carrier (1; 51) and a weighing pan support member (2; 52), which is connected with the system carrier by two upper and two lower guide arms in the form of a parallel guide, wherein a respective upper guide arm and lower guide arm are connected together by two connecting regions and are combined into a guide plate and wherein the two guide plates (5, 6; 55) are fastened laterally to the system carrier and to the weighing pan support member, characterised thereby that the system carrier (1; 51) is constructed to be wider than the weighing pan support member (2; 52) and that the two screw-on surfaces for the two guide plates (5, 6; 55) form an angle with one another not only at the system carrier (1; 51), but also at the weighing pan support member (2; 52), so that the system carrier (1; 51), the two guide plates (5, 6; 55) and the weighing pan support member (2; 52) form a trapezium in plan view.

2. Weighing machine according to claim 1, characterised thereby that the cross-section varies within the thin locations (21, 22, 23, 24; 41, 42, 43, 44).

3. Weighing machine according to one of the claims 1 or 2, characterised thereby that the thin locations (41, 42, 43, 44) at the side of the system carrier (1) and at the side of the weighing pan support member (2) are constructed differently.

4. Weighing machine according to one of the claims 1 to 3, characterised thereby that the region (45; 46) between the thin locations (41, 42; 43, 44) is constructed asymmetrically relative to the centre line of the thin locations (41, 42; 43, 44).

5. Weighing machine according to one of the claims 1 to 4, characterised thereby that the guide arms (41/45/42, 44/46/43) are screwed to the weighing pan support member (2) and to the system carrier (1) and that the position of the screws (15; 49, 50) is different at the weighing pan support member (2) and at the system carrier (1).

6. Weighing machine according to one of the claims 1 to 5, characterised thereby that the connecting region (28) has a slot (29) at the side of the system carrier (1).

7. Weighing machine aaccording to one of the claims 1 to 6, characterised thereby that the vertical spacing of the thin locations (11, 14; 21, 24; 41, 44) at the side of the system carrier (1) is somewhat greater than the vertical spacing of the thin locations (12, 13; 22, 23; 42, 43) at the side of the weighing pan support member (2).

8. Weighing machine according to one of the claims 1 to 7, characterised thereby that the two guide plates are combined into a single component (55), which is constructed as a bending member with at least one vertical axis of bending.

9. Weighing machine according to claim 8, characterised thereby that in the case of a weighing machine with lever translation, the coupling element (54) between the weighing pan support member (52) and the translation lever is likewise integrated into the component (55).

## Revendications

1. Balance comportant un support de système (1;51) fixé à un carter et une pièce support (2;52) du plateau de balance, laquelle pièce est reliée au support du système par deux entretoises supérieures et deux entretoises inférieures de bras oscillants sous forme d'un guidage parallèle, une entretoise supérieure de bras oscillant et une entretoise inférieure de bras oscillant étant respectivement reliées entre elles par l'intermédiaire de deux secteurs de raccordement et regroupées en une plaque de bras oscillant et les deux plaques de bras oscillant (5,6;55) étant fixées au support de système et à la pièce support du plateau de balance, caractérisée en ce que le support de système (1;51) est plus large que la pièce support (2;52) du plateau de balance et en ce que les deux surfaces à visser aussi bien sur le support de système (1;51) que sur la pièce support (2;52) du plateau de balance, des deux plaques de bras oscillants (5,6;55) forment entre elles un angle, de sorte que le support de système (1;51), les deux plaques de bras oscillants (5,6;55) et la pièce support (2;52) du plateau de balance forment, vus d'en haut, un trapèze.

2. Balance selon la revendication 1, caractérisée en ce que la section transversale délimitée par les points minces (21,22,23,24;41,42,43,44) varie.

3. Balance selon l'une des revendications 1 ou 2, caractérisée en ce que les points minces (41,42,43,44) ont une configuration différente sur le côté du support de système (1) et sur le côté de la pièce support (2) du plateau de balance.

4. Balance selon l'une des revendications 1 à 3, caractérisée en ce que le secteur (45,46) entre les points minces (41,42;43,44) est configuré asymétriquement par rapport à la ligne médiane des points minces (41,42;43,44).

5. Balance selon l'une des revendications 1 à 4, caractérisée en ce que les entretoises de bras oscillants (41/45/42,44/46/43) sont vissées à la pièce support (2) du plateau de balance et au support de système (1) et en ce que la position des vis (15;49,50) est différente sur la pièce support (2) du plateau de balance et sur le support de système (1).

6. Balance selon l'une des revendications 1 à 5, caractérisée en ce que sur le côté du support de système(1), le secteur de raccordement (28) présente une fente (29).

7. Balance selon l'une des revendications 1 à 6, caractérisée en ce que la distance verticale des points minces (11,14;21,24;41,44) sur le côté du support de système(1) est légèrement plus grande que la distance verticale des points minces (12,13;22,23;42,43) sur le côté de la pièce support (2) du plateau de balance.

8. Balance selon l'une des revendications 1 à 7, caractérisée en ce que les deux plaques de bras oscillants sont réunies en une seule pièce (55), qui est conformée en pièce pliée comportant au moins un axe de pliage vertical.

9. Balance selon la revendication 8, caractérisée en ce que dans une balance comportant une transmission par levier, l'élément de couplage (54) entre la pièce support (52) du plateau de balance et le levier de transmission est éventuellement intégré en même temps dans la pièce (55).
